Europäisches Patentamt

European Patent Office

Office européen des brevets

(19)

(11) Veröffentlichungsnummer : **0 363 663 B1**

# (12) EUROPÄISCHE PATENTSCHRIFT

(45) Veröffentlichungstag der Patentschrift :
**22.07.92 Patentblatt 92/30**

(51) Int. Cl.$^5$: **B62M 3/08**

(21) Anmeldenummer : **89116911.2**

(22) Anmeldetag : **13.09.89**

(54) **Fahrradpedal mit auslösbarer Bindung.**

(30) Priorität : **05.10.88 DE 3833790**

(43) Veröffentlichungstag der Anmeldung :
**18.04.90 Patentblatt 90/16**

(45) Bekanntmachung des Hinweises auf die
Patenterteilung :
**22.07.92 Patentblatt 92/30**

(84) Benannte Vertragsstaaten :
**AT BE CH DE FR IT LI LU NL**

(56) Entgegenhaltungen :
**EP-A- 0 169 080**
**WO-A-89/06619**
**FR-A- 2 619 781**
**FR-A- 2 620 412**

(73) Patentinhaber : **GEZE SPORT**
**INTERNATIONAL GMBH**
**Untere Burghalde 27**
**W-7250 Leonberg 1 (DE)**

(72) Erfinder : **Dapezi, Karl**
**Am Hohlweg 9**
**A-2111 Kleinrötz (AT)**

(74) Vertreter : **Manitz, Gerhart, Dr. Dipl.-Phys. et al**
**MANITZ, FINSTERWALD & ROTERMUND**
**Seelbergstrasse 23/25**
**W-7000 Stuttgart 50 (DE)**

EP 0 363 663 B1

**Beschreibung**

Die Erfindung betrifft ein Fahrradpedal mit auslösbarer Bindung, welche einen an dieselbe angepaßten Schuh bzw. ein schuhseitiges Kupplungsteil od.dgl. mit dem Pedal zu kuppeln und bei Drehung des Schuhes um eine zur Trittfläche des Pedales etwa senkrechte Achse gegen eine Auslösekraft bzw. Federung freizugeben gestattet.

Radrennfahrer benötigen eine feste Halterung der Schuhe an den Fahrradpedalen. Dementsprechend ist es üblich, die Schuhe an den Pedalen zu fixieren. Dies bringt jedoch eine recht große Verletzungsgefahr mit sich, wenn der Radfahrer bei einem plötzlichen Stop oder Sturz die Füße nicht schnell genug von den Pedalen lösen kann.

Aus diesem Grunde wurden bereits Fahrradpedale mit auslösbaren Bindungen der eingangs angegebenen Art entwickelt. Dabei wirken beispielsweise gemäß der WO-A 89/06619 pedalseitig angeordnete, federbeaufschlagte Riegelorgane mit an der Schuhsohle angeordneten Gegenriegelteilen derart zusammen, daß Schuh und Pedal miteinander verriegelt werden, wenn der Schuh mit hinreichender Kraft in die Riegelorgane eingeschoben bzw. eingesetzt wird. Durch eine Drehbewegung des Schuhs relativ zu einer zur Trittfläche senkrechten Achse lassen sich dann die Riegelorgane bis in eine Freigabelage auslenken.

Bei diesen bekannten Konstruktionen ist jedoch grundsätzlich nachteilig, daß die Stärke des Auslösewiderstandes bzw. der Auslösefederung auch die notwendige Kraft erhöht, mit der der Schuh zur Verriegelung mit dem Pedal auf dessen Trittfläche niedergedrückt bzw. in Eingriff mit den Riegelorganen gebracht werden muß.

Deshalb ist es Aufgabe der Erfindung, ein Fahrradpedal mit auslösbarer Bindung zu schaffen, bei der der Einstiegswiderstand weitestgehend unabhängig von der jeweiligen Auslösekraft ist.

Diese Aufgabe wird bei einem Fahrradpedal der eingangs angegebenen Art erfindungsgemäß dadurch gelöst, daß ein das Kupplungsteil bzw. ein Schuh- oder Sohlenteil formschlüssig aufnehmender Schuhhalter, welcher am Pedal um eine zur Trittfläche etwa senkrechte Achse gegen die Auslösekraft bzw. -federung auslenkbar sowie relativ zur Trittfläche höhenbeweglich bzw. um eine etwa trittflächenparallele Achse schwenkbar ist, aus einer zur Trittfläche hochgehobenen Einstiegslage, in der das Kupplungs- bzw. der Schuh- oder Sohlenteil in etwa sohlenparalleler Richtung, insbesondere in Schuhlängsrichtung, in den Schuhhalter einschiebbar bzw. aus demselben herausziehbar ist, bei eingeschobenem Kupplungs- bzw. Schuh- oder Sohlenteil gegen die Trittfläche in eine Riegellage niedertretbar ist, in der ein pedalseitiges Riegelteil in ein Gegenriegelteil am Kupplungs- bzw. Schuh- oder Sohlenteil eingreift, und daß ein die Riegellage des Schuhhalters sicherndes Riegelorgan den Schuhhalter freigibt und/oder das Riegelteil aus dem Gegenriegelteil austritt, wenn der Schuhhalter aus seiner Riegellage gegen die Auslösekraft bzw. -federung unter Schwenkung um die zur Trittfläche etwa senkrechte Achse ausgelenkt wird.

Erfindungsgemäß sind also die zur Verriegelung von Schuh und Pedal miteinander dienenden Elemente getrennt von denjenigen Elementen angeordnet bzw. ausgebildet, die ein Auslösen der Bindung zwischen Schuh und Pedal ermöglichen.

Durch die relativ zur Trittfläche höhenbewegliche bzw. hochklappbare Anordnung des Schuhhalters kann in dessen Einstiegslage gewährleistet werden, daß sich das Kupplungsteil bzw. der Schuh- oder Sohlenteil ohne Störung durch das pedalseitige Riegelteil in den Schuhhalter einschieben lassen; beim nachfolgenden Niedertreten des Schuhhalters können das pedalseitige Riegelteil sowie das schuhseitige Gegenriegelteil widerstandsfrei ineinander eingreifen, so daß der Schuh am Schuhhalter fixiert gehalten wird.

Die Trennung von Schuh und Pedal erfolgt, indem der Schuh durch äußere Kräfte, beispielsweise bei einem Sturz, oder willentlich bezüglich der zur Trittfläche etwa senkrechten Achse ausgelenkt wird, mit der Folge, daß der Schuhhalter nunmehr, weil das Riegelorgan aufgrund der Auslenkung unwirksam wird, relativ zur Trittfläche angehoben bzw. hochgeklappt werden kann, wodurch der Eingriff von Riegelteil und Gegenriegelteil aufgehoben wird, und/oder daß Riegelteil und Gegenriegelteil bereits aufgrund der Auslenkung des Schuhhalters um die zur Trittfläche etwa senkrechte Achse voneinander getrennt werden.

Grundsätzlich können also das Riegelteil bzw. die Riegelteile stationär am Pedal angeordnet sein, wenn sich der Eingriff zwischen demselben und dem zugeordneten Gegenriegelteil bzw. Gegenriegelteilen durch den Auslöseschwenk des Schuhs bzw. Schuhhalters und/oder durch die bei hinreichendem Auslöseschwenk mögliche Hubbewegung des Schuhhalters aufheben läßt.

Gemäß einer bevorzugten Ausführungsform der Erfindung kann jedoch vorgesehen sein, daß das Riegelteil bzw. die Riegelteile bei der zu einer Auslösung führenden Auslenkbewegung des Schuhhalters einen Entriegelungshub relativ zum Pedal ausführen und dementsprechend durch eine eigene Bewegung aus dem jeweils zugeordneten Gegenriegelteil bzw. Gegenriegelteilen austreten.

Beispielsweise kann das Riegelteil zusammen mit dem Schuhhalter um die zur Trittfläche senkrechte Achse auslenkbar und mittels einer Feder gegen eine Führungsfläche bzw. -bahn gespannt sein, an die sich eine

2

Vertiefung bzw. Aussparung anschließt, in die sich das Riegelteil bei Auslenkung des Schuhhalters gegen die Auslösekraft bzw. -federung einsenkt.

Diese Anordnung ist insbesondere dann zweckmäßig, wenn der Schuhhalter um die etwa trittflächenparallele Achse hochklappbar angeordnet ist. In diesem Falle kann nämlich die Feder, welche das Riegelteil gegen die Führungsfläche bzw. -bahn zu drängen sucht, gleichzeitig dazu dienen, den Schuhhalter in Richtung seiner hochgeklappten Lage zu beaufschlagen.

Im übrigen wird hinsichtlich bevorzugter Merkmale der Erfindung auf die Ansprüche sowie die nachfolgende Erläuterung besonders bevorzugter Ausführungsformen anhand der Zeichnung verwiesen.

Dabei zeigt

Fig. 1 eine Draufsicht auf das erfindungsgemäße Pedal sowie ein damit verbindbares schuhseitiges Kupplungsteil,
Fig. 2 eine geschnittene Seitenansicht des Pedales entsprechend der Schnittlinie II-II in Fig. 1, wobei die Einstiegslage des Schuhhalters dargestellt ist,
Fig. 3 eine der Fig. 2 entsprechende Schnittdarstellung der Riegellage von Schuhhalter und Schuh,
Fig. 4 eine Draufsicht auf das Pedal, wobei dessen Schuhhalter gegen die Kraft einer Auslösefederung zur Seite ausgelenkt ist,
Fig. 5 ein Schnittbild entsprechend der Schnittlinie V-V in Fig. 4 und
Fig. 6 eine der Fig. 3 entsprechende Schnittdarstellung einer abgewandelten Ausführungsform.

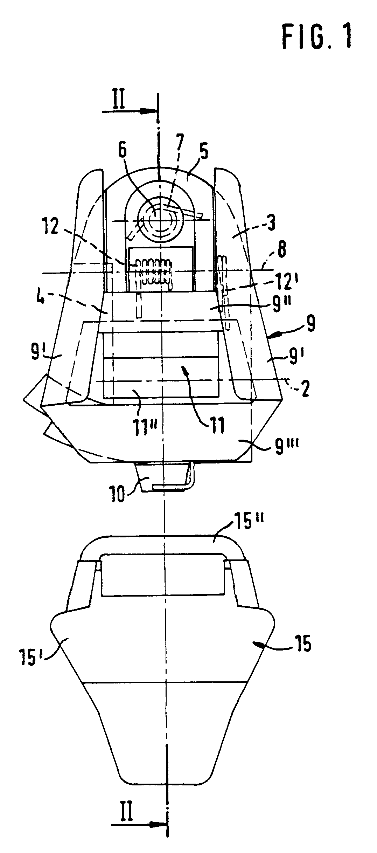

Das in den Figuren 1 bis 5 dargestellte Pedal besitzt einen Grundkörper 1, welcher um eine Pedalachse 2 drehbar an einer nicht dargestellten Tretkurbel eines Fahrrades angeordnet ist. Die Oberseite des Grundkörpers 1 bildet eine ebene Trittplatte bzw. Trittfläche 3, die an ihrer von der Tretkurbel abgewandten Seite eine seitliche Aussparung 4 besitzt, deren Zweck weiter unten erläutert wird.

Am vorderen Ende der Trittfläche 3 ist auf derselben ein Halteteil 5 mittels eines Bolzens 6 um eine zur Trittfläche 3 senkrechte Achse drehbar gelagert. Die Drehung erfolgt gegen den Widerstand einer einstellbar vorgespannten Auslösefeder 7, welche das Halteteil 5 in Fig. 1 entgegen dem Uhrzeigersinn in die dargestellte Normallage zu drängen sucht.

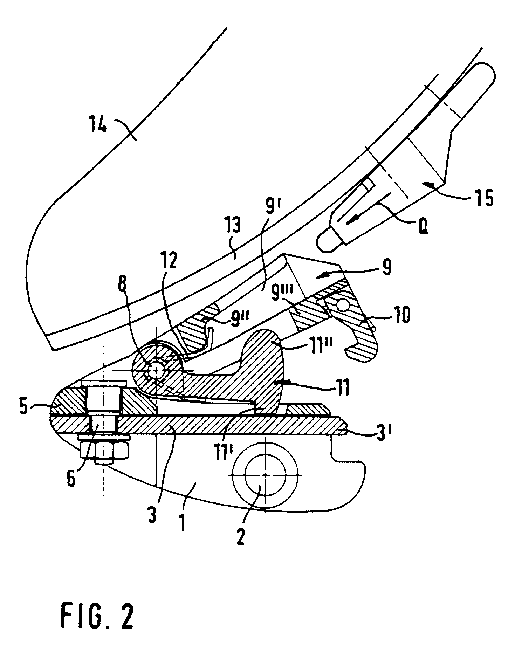

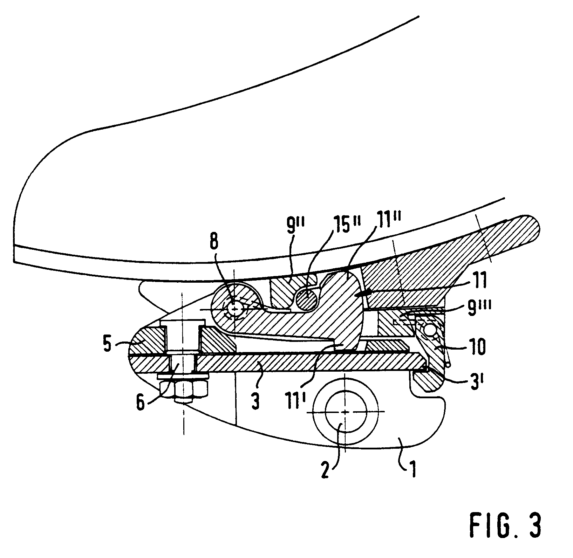

Am Halteteil 5 ist um eine zur Trittfläche 3 parallele Achse 8 ein Schuhhalter 9 schwenkbar gelagert, welcher zwei Seitenteile 9′ besitzt, die annähernd C-förmiges Profil mit einander zugewandten Konkav-Seiten haben. Nahe der Achse 8 sind die Seitenteile 9′ durch einen Quersteg 9″ verbunden, welcher im Längsschnitt der Figuren 2 und 3 Winkelprofil aufweist. An ihren von der Achse 8 entfernten Enden sind die Seitenteile 9′ unterseitig durch einen plattenförmigen Quersteg 9‴ miteinander verbunden, an dem eine federbeaufschlagte Klinke 10 angeordnet ist, die mit der hinteren Kante 3′ der Trittfläche 3 zusammenwirkt. Die Seitenteile 9′ bilden in der Draufsicht der Fig. 1 einen sich nach rückwärts öffnenden Trichter.

Zwischen den Seitenteilen 9′ ist mittels der den Schuhhalter 9 halternden Achse 8 ein in der Seitenansicht der Figuren 2 und 3 hakenförmiges Riegelteil 11 gelagert. Das Riegelteil 11 wird von einer Feder 12 beaufschlagt, welche das freie Ende des Riegelteiles 11 in Fig. 1 im Uhrzeigersinne gegen die Trittfläche 3 zu drängen sucht. Die Feder 12 ist als auf der Achse 8 angeordnete Schenkelfeder ausgebildet, deren einer Schenkel am Riegelteil 11 und deren anderer Schenkel am Quersteg 9″ des Schuhhalters 9 abgestützt ist. Dementsprechend sucht die Feder 12 den Schuhhalter 9 unter Schwenkung um die Achse 8 nach oben zu kippen. Zusätzlich kann zwischen dem Halteteil 5 und dem Schuhhalter 9 eine weitere Feder 12′ wirksam sein, welche ebenfalls als Schenkelfeder ausgebildet und auf der Achse 8 angeordnet sein kann. Diese weitere Feder 12′ sucht den Schuhhalter 9 relativ zum Halteteil 5 in die hochgeklappte Lage gemäß Fig. 2 zu drängen.

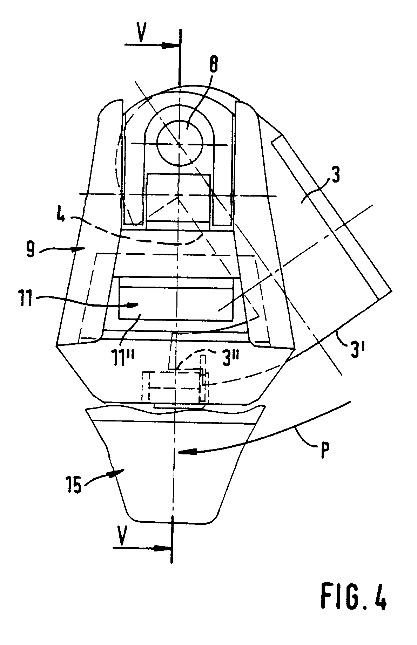

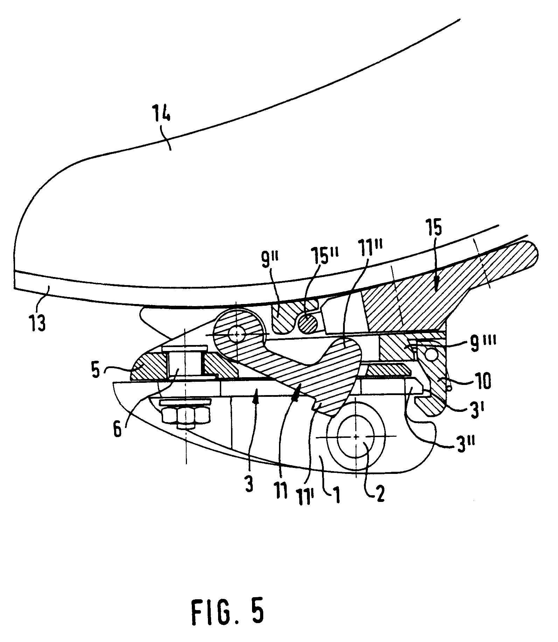

Das Riegelteil 11 ist mittels eines an ihm angeordneten, nach unten gerichteten Fortsatzes 11′ auf der Trittplatte 3 abgestützt. Falls der Schuhhalter 9 mit dem Halteteil 5 um die Achse des Bolzens 6 relativ zur Trittplatte 3 entsprechend dem Pfeil P in Fig. 4 verschwenkt wird, nimmt das Riegelteil 11 eine Lage im Bereich der Aussparung 4 der Trittplatte 3 ein und wird durch sein Eigengewicht sowie die Kraft der Feder 12 nach unten verschwenkt, wie in Fig. 5 dargestellt ist.

Unter der Sohle 13 der Schuhe 14 ist jeweils ein Kupplungsteil 15 angeordnet, welches einen in Draufsicht plattenförmigen Bereich 15′ sowie ein daran nach vorne anschließendes Ösenteil 15″ aufweist. Die in den plattenförmigen Bereich 15′ übergehenden Seitenschenkel des Ösenteiles 15″ besitzen eine dem Profil der Seitenteile 9′ des Schuhhalters 9 angepaßte Form, so daß das Kupplungsteil 15 bzw. dessen Ösenteil 15″ im Schuhhalter 9 praktisch spielfrei umschlossen wird, wenn das Kupplungsteil 15 weitestmöglich in den Schuhhalter 9 eingeschoben wird und das Ösenteil 15″ am Quersteg 9″ des Schuhhalters 9 anliegt.

Das in den Figuren 1 bis 5 dargestellte Fahrradpedal funktioniert wie folgt:

Zunächst steht der Schuhhalter 9 in seiner Einstiegsstellung entsprechend Fig. 2, wobei der Schuhhalter 9 in Draufsicht die in Fig. 1 dargestellte Lage einnimmt. Nunmehr wird durch entsprechende Bewegung des Schuhs 14 das Kupplungsteil 15 entsprechend dem Pfeil Q in Fig. 2 in den Schuhhalter 9 eingeschoben, bis das Ösenteil 15″ am vorderen Quersteg 9″ des Schuhhalters 9 anliegt, wobei gleichzeitig die in den plattenförmigen Bereich 15′ übergehenden Seitenteile der Öse 15″ spielfrei an den Seitenteilen 9′ des Schuhhalters 9 zur Anlage kommen. Nunmehr wird der Schuh in die in Fig. 3 dargestellte Lage niedergetreten; dabei tritt das hakenförmige Ende 11″ des Riegelteiles 11 in die Öffnung des Ösenteiles 15″ ein, gleichzeitig wird der Schuhhalter 9 durch die Klinke 10 an der hinteren Kante 3′ der Trittplatte 3 verriegelt. Damit ist der Schuh 14 fest und praktisch spielfrei mit dem Pedal verbunden. Wird nun der Schuh 14 mit seiner Ferse willentlich oder durch den Einfluß äußerer Kräfte entsprechend dem Pfeil P in Fig. 4 in Richtung der Außenseite des Fußes ausgelenkt, so gelangt die Klinke 10 des Schuhhalters 9 in den Bereich einer Aussparung 3″ an der hinteren Kante 3′ der Trittplatte 3; gleichzeitig fällt das Riegelteil 11 in die seitliche Aussparung 4 der Trittplatte 3. Dementsprechend schwenkt das Riegelteil 11 gemäß Fig. 5 nach unten, d.h. das hakenförmige Ende 11′ des Riegelteiles 11 greift nicht mehr in das Ösenteil 15″ des Kupplungsteiles 15 ein; der Schuh 14 kann nun also in Fig. 5 nach hinten gezogen werden, wobei das Kupplungsteil 15 aus dem Schuhhalter 9 herausgezogen wird. Im übrigen kann der Schuhhalter 9 aufgrund der im Bereich der Aussparung 3″ stehenden Klinke 10 um die Achse 8 nach oben in die Einstiegsstellung schwenken.

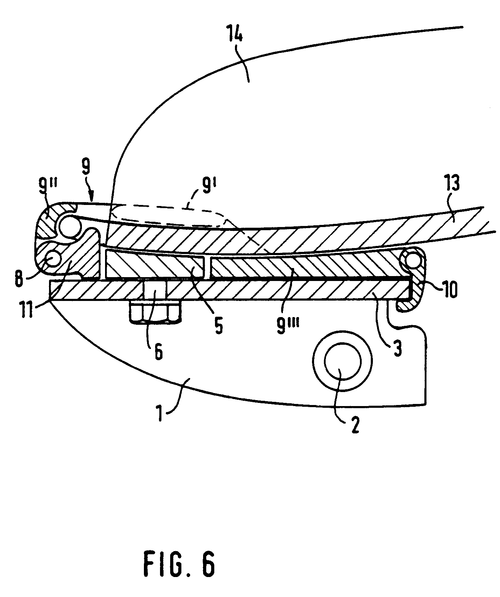

Die in Fig. 6 dargestellte Ausführungsform unterscheidet sich von der Ausführungsform nach den Figuren 1 bis 5 zunächst dadurch, daß das Kupplungsteil in die Sohle 13 des Schuhes 14 integriert ist, und zwar derart, daß das Ösenteil 15″ die Spitze der Sohle 13 bildet. Aufgrund dieser Anordnung des Kupplungsteiles 15 kann der Radfahrer in den Schuhen 14 praktisch in normaler Weise laufen.

Der Schuhhalter 19 ist derart geformt, daß seine Seitenteile 9′ die Ränder des vorderen Bereiches der Schuhsohle 13 formschlüssig umgreifen, wenn die Schuhsohle 13 derart weit in den Schuhhalter 9 eingeschoben wird, daß das Ösenteil 15″ am vorderen Quersteg 9″ des Schuhhalters 3 anliegt.

Der Schuhhalter 9 sowie das Riegelteil 11 sind in Fahrtrichtung vor dem Bolzen 6 des Halteteiles 5 an demselben um die Achse 8 schwenkgelagert.

Die Funktion des in Fig. 6 dargestellten Pedales entspricht der Funktion des in den Figuren 1 bis 5 gezeigten Pedales. Der Schuhhalter 9 besitzt eine entsprechend der Fig. 2 hochgeklappte Einstiegslage, in der sich der Vorderbereich der Schuhsohle 13 mit dem Ösenteil 15″ ohne Behinderung durch das hakenförmige Ende 11′ des Riegelteiles 11 in den Schuhhalter 9 einschieben läßt. Beim Niedertreten des Schuhhalters 9 greift dann das hakenförmige Ende 11″ des Riegelteiles 11 in das Ösenteil 15″ ein; gleichzeitig umgreift die federbeaufschlagte Klinke 10 am hinteren Rand des hinteren Quersteges 9‴ des Schuhhalters 9 die nach hinten weisende Kante 3′ der Trittfläche bzw. -platte 3. Wird nun der Schuh 13 mit der Ferse gegen die Kraft der Auslösefeder 7 zur Fußaußenseite hin geschwenkt, so kommt die Klinke 10 von der Kante 3′ frei; gleichzeitig fällt das Riegelteil 11 in eine in Fig. 6 nicht sichtbare Aussparung der Trittfläche bzw. -platte 3, so daß das hakenförmige Ende 11″ aus dem Ösenteil 15″ austritt.

Grundsätzlich können noch weitere Abänderungen vorgesehen und vorteilhaft sein.

Beispielsweise kann das Riegelteil 11 auch mit Aussparungen, Vorsprüngen od.dgl. am Sohlenrand und/oder einem seitlichen Teil des Schuhes 14 zusammenwirken.

Darüber hinaus ist es grundsätzlich möglich, das Riegelteil 11 stationär an der Trittfläche bzw. -platte 3 anzuordnen. Dabei muß gewährleistet sein, daß der Schuh 14, dessen Sohle 13 oder dessen Kupplungsteil 15 ohne Behinderung durch das Riegelteil 11 in den Schuhhalter 9 eingeschoben werden kann, wenn derselbe seine Einstiegslage einnimmt. Beim Niedertreten des Sohlenhalters 9 wird dann das stationäre Riegelteil 11 in Eingriff mit dem schuhseitigen Gegenriegelteil gebracht. Im übrigen muß das stationäre Riegelteil derart vom Bolzen 6 bzw. der Achse, um die der Schuhhalter 9 beim Auslösen ausgelenkt wird, beabstandet sein, daß durch die genannte Schwenkbewegung der Riegeleingriff zwischen dem stationären Riegelteil 11 und dem schuhseitigen Gegenriegelteil aufgehoben wird.

In den Figuren 1 bis 6 führt der Schuhhalter 9 jeweils eine Schwenkbewegung um die Achse 8 aus, wenn er aus seiner Einstiegslage in die Riegellage niedergetreten wird. Statt einer solchen schwenkbaren Anordnung sind auch Konstruktionen möglich, bei denen der Schuhhalter 9 relativ zur Trittfläche bzw. -platte eine rein translatorische Hubbewegung ausführt.

Die Klinken 10 sind in den Figuren 1 bis 6 jeweils am Schuhhalter 9 angeordnet und wirken mit der hinteren Kante 3′ der Trittfläche bzw. -platte 3 zusammen. Stattdessen ist es auch möglich, die Klinken 10 an der Trittplatte 3 anzuordnen und die Klinke 10 in Riegellage des Schuhhalters 9 eine Kante am hinteren Rand des hinteren Quersteges 9‴ hintergreifen zu lassen.

**Patentansprüche**

1. Fahrradpedal mit auslösbarer Bindung, welche einen an dieselbe angepaßten Schuh bzw. ein schuhseitiges Kupplungsteil od.dgl. mit dem Pedal zu kuppeln und bei Drehung des Schuhes um eine zur Trittfläche bzw. -platte des Pedales etwa senkrechte Achse gegen eine Auslösekraft bzw. -federung freizugeben gestattet, dadurch gekennzeichnet,

daß ein das Kupplungsteil (15) bzw. ein Schuh- oder Sohlenteil formschlüssig aufnehmender Schuhhalter (9), welcher am Pedal um eine zur Trittfläche bzw. -platte (3) etwa senkrechte Achse (6) gegen die Auslösekraft bzw. -federung (7) auslenkbar sowie relativ zur Trittfläche bzw. -platte (3) höhenbeweglich bzw. um eine etwa trittflächenparallele Achse (8) schwenkbar ist, aus einer zur Trittfläche bzw. -platte (3) hochgehobenen Einstiegslage (Fig. 2), in der das Kupplungs- bzw. der Schuh- oder Sohlenteil (15) in etwa sohlenparalleler Richtung, insbesondere in Schuhlängsrichtung, in den Schuhhalter (9) einschiebbar bzw. aus demselben herausziehbar ist, bei eingeschobenem Kupplungs- bzw. Schuh- oder Sohlenteil (15) gegen die Trittfläche bzw. -platte (3) in eine Riegellage (Fig. 3) niedertretbar ist, in der ein pedalseitiges Riegelteil (11) in ein Gegenriegelteil (15″) am Kupplungs- bzw. Schuh- oder Sohlenteil (15) eingreift, und daß ein die Riegellage des Schuhhalters (9) sicherndes Riegelorgan (10) den Schuhhalter (9) freigibt und/oder das Riegelteil (11) aus dem Gegenriegelteil (15″) austritt, wenn der Schuhhalter (9) aus seiner Riegellage gegen die Auslösekraft bzw. -Federung (7) unter Schwenkung um die zur Trittfläche bzw. -platte (3) etwa senkrechte Achse (6) ausgelenkt wird.

2. Fahrradpedal nach Anspruch 1, dadurch gekennzeichnet, daß der Schuhhalter (9) mittels Feder (12) in Richtung der Einstiegslage (Fig. 2) gespannt ist.

3. Fahrradpedal nach einem der Ansprüche 1 oder 2, dadurch gekennzeichnet, daß das Riegelteil (11) zusammen mit dem Schuhhalter (9) um die zur Trittfläche bzw. -platte (3) senkrechte Achse (6) auslenkbar ist und bei Auslenkung des Schuhhalters (9) gegen die Auslösekraft bzw. -federung (7) relativ zur Trittfläche bzw. -platte (3) nach unten schwenkt und damit aus dem Gegenriegelteil (15″) austritt.

4. Fahrradpedal nach Anspruch 3, dadurch gekennzeichnet, daß das Riegelteil (11) durch eine Feder (12) gegen eine Führungsfläche bzw. -bahn (Trittplatte 3) gespannt ist, an die sich eine Vertiefung bzw. Aussparung (4) anschließt, in die sich das Riegelteil (11) bei Auslenkung des Schuhhalters (9) gegen die Auslösekraft bzw. -federung (7) einsenkt.

5. Fahrradpedal nach einem der Ansprüche 3 oder 4, dadurch gekennzeichnet, daß eine einzige Feder (12), z.B. eine Schenkelfeder, den Schuhhalter (9) in die Einstiegslage (Fig. 2) und das Riegelteil (11) nach unten drängt.

6. Fahrradpedal nach einem der Ansprüche 1 bis 5, dadurch gekennzeichnet, daß das Riegelteil (11) in Riegellage (Fig. 3) in eine Öse (15″) am Kupplungsteil (15) eingreift.

7. Fahrradpedal nach einem der Ansprüche 1 bis 5, dadurch gekennzeichnet, daß das Riegelteil (11) in Riegellage (Fig. 3) mit einem Vorsprung bzw. einer Aussparung in der Sohle (13) bzw. am Sohlenrand oder in bzw. an einem Schuhteil zusammenwirkt.

8. Fahrradpedal nach einem der Ansprüche 1 bis 7, dadurch gekennzeichnet, daß das Riegelorgan (10) bzw. die Riegelorgane federbeaufschlagt sind und sich beim Niedertreten des Schuhhalters (9) relativ zur Trittfläche bzw. -platte (3) mit dem Gegenriegelorgan (3′) selbsttätig verriegeln, und daß der Riegeleingriff durch Auslenkung des Schuhhalters (9) gegen die Auslösekraft bzw. -federung (7) aufhebbar ist.

9. Fahrradpedal nach Anspruch 8, dadurch gekennzeichnet, daß die Riegelorgane als federbeaufschlagte Schieber bzw. Klinken (10) ausgebildet sind.

10. Fahrradpedal nach einem der Ansprüche 1 bis 9, dadurch gekennzeichnet, daß die Auslösekraft bzw. -federung (7) den Schuhhalter (9) in eine Lage drängen, in der der Schuhhalter (9) ohne Drehung um die zur Trittfläche bzw. -platte (3) senkrechte Achse (6) in die Riegellage (Fig. 3) niedertretbar ist.

11. Fahrradpedal nach einem der Ansprüche 1 bis 10, dadurch gekennzeichnet, daß das Riegelteil bzw. die Riegelteile (11), welches bzw. welche durch Niedertreten des Schuhhalters (9) in Eingriff mit dem Gegenriegelteil bzw. den Gegenriegelteilen (15″) gelangen, stationär am Pedal mit Abstand von der zur Trittfläche bzw. -platte senkrechten Achse (6) angeordnet sind, derart, daß sie bei Verschwenkung des Schuhhalters (9) um die zur Trittfläche bzw. -platte (3) senkrechte Achse (6) aus dem Riegelteil bzw. den Riegelteilen (11) austreten.

12. Fahrradpedal nach einem der Ansprüche 1 bis 10, dadurch gekennzeichnet, daß als Gegenriegelteil eine schuhseitige Öse (15″) angeordnet ist, in die das Riegelteil (11) beim Niedertreten des Schuhhalters (9) von unten eintritt.

13. Fahrradpedal nach einem der Ansprüche 1 bis 12, dadurch gekennzeichnet, daß das Riegelorgan (10) bzw. die Riegelorgane auslösbar sind.

14. Fahrradpedal nach einem der Ansprüche 1 bis 13, dadurch gekennzeichnet, daß der durch Feder (7) erzeugte Auslösewiderstand des Schuhhalters (9) einstellbar bzw. veränderbar ist.

**Claims**

1. Bicycle pedal with a releasable binding, which allows a shoe matched to the binding, or a coupling part at the shoe side or the like, to be coupled to the pedal and to be freed on rotation of the shoe about an axis substantially perpendicular to the pressure surface or plate of the pedal against a release force or a release spring system, characterised in that
a shoe holder (9), which receives the coupling part (15) or a part of the shoe or of the sole in form-locked engagement and which is pivotable on the pedal about an axis (6) substantially perpendicular to the pressure surface or plate (3) against the release force or the release spring system (7) and is also upwardly movable relative to the pressure surface or plate (3), or pivotable about an axis (8) substantially parallel to the pressure surface, can, when the coupling part or the part of the shoe or of the sole (15) is engaged, be urged downwardly towards the pressure surface or plate (3) from an entry position (fig. 2) raised with respect to the pressure surface or plate (3) in which the coupling part or the part of the shoe or of the sole (15) can be engaged into or withdrawn from the shoe holder (9) in a direction approximately parallel to the sole, in particular in the longitudinal direction of the shoe, into a lock position (fig. 3) in which a latching part (11) at the pedal side engages into a counter-latching part (15″) on the coupling part (15) or the part of the shoe or of the sole; and in that a latching member (10) which secures the latched position of the shoe holder (9) frees the shoe holder (9) and/or the latching part (11) disengages from the counter-latching part (15″), when the sole holder (9) is pivoted out of its latched position against the release force or the release spring system (7) while pivoting about the axis (6) substantially perpendicular to the pressure surface or plate (3).

2. Bicycle pedal according to claim 1, characterised in that the shoe holder (9) is urged by a spring means (12) in the direction of the entry position (fig. 2).

3. Bicycle pedal according to either claim 1 or 2, characterised in that the latching part (11) can be pivoted together with the shoe holder (9) about the axis (6) perpendicular to the pressure surface or plate (3) and, on rotation of the shoe holder (9) against the release force or the release spring system (7), tilts downwardly relative to the pressure surface or plate (3) and thus disengages from the counter-latching part (15″).

4. Bicycle pedal according to claim 3, characterised in that the latching part (11) is urged by a spring (12) against a guide surface or track (pressure plate 3) which is followed by a recess or a cut-out (4) into which the latching part (11) sinks on rotation of the sole holder (9) against the release force or the release spring system (7).

5. Bicycle pedal according to either claim 3 or 4, characterised in that a single spring (12), e.g. a spiral spring, urges the sole holder (9) into the entry position (fig. 2) and the latching part (11) downwardly.

6. Bicycle pedal according to anyone of the claims 1 to 5, characterised in that in the latched position (fig. 3) the latching part (11) engages into an eye (15″) on the coupling part (15).

7. Bicycle pedal according to anyone of the claims 1 to 5, characterised in that in the latched position (fig. 3) the latching part (11) cooperates with a projection or a cut-out in the sole (13), or in the edge of the sole, or in or on a part of the shoe.

8. Bicycle pedal according to anyone of the claims 1 to 7, characterised in that the latching member (10) or members are biassed by spring means and lock automatically with the counter-latching member (3′) when the shoe holder (9) is pushed downwardly relative to the pressure surface or plate (3); and in that the latching engagement can be released by rotating the shoe holder (9) against the release force or the release spring system (7).

9. Bicycle pedal according to claim 8, characterised in that the latching members are realised as spring-biassed slides or pawls (10).

10. Bicycle pedal according to anyone of the claims 1 to 9, characterised in that the release force or the release spring system (7) urges the sole holder (9) into a position in which the sole holder (9) can be pushed downwardly into the latched position (fig. 3) without rotation about the axis (6) perpendicular to the pressure surface or plate (3).

11. Bicycle pedal according to anyone of the claims 1 to 10, characterised in that the latching part or parts (11), which come into engagement with the counter-latching part or parts (15″) on pushing the shoe holder (9) downwardly, are arranged stationary on the pedal at a distance from the axis (6) perpendicular to the pressure surface or plate (3), in such a manner that they disengage from the latching part or parts (11) on rotating the shoe holder (9) about the axis (6) perpendicular to the pressure surface or plate (3).

12. Bicycle pedal according to anyone of the claims 1 to 10, characterised in that an eye (15″) is provided at the shoe side as counter-latching part, into which the latching part (11) penetrates from below on pushing the shoe holder (9) downwardly.

13. Bicycle pedal according to anyone of the claims 1 to 12, characterised in that the latching member (10) or members are releasable.

14. Bicycle pedal according to anyone of the claims 1 to 13, characterised in that the release resistance of the sole holder (9), which is produced by a spring (7), is adjustable or can be modified.

## Revendications

1. Pédale de bicyclette avec cale-pied libérable, lequel permet d'accoupler à la pédale une chaussure adaptée au cale-pied ou une pièce d'accouplement côté chaussure ou similaire, et permet de libérer ladite chaussure ou pièce d'accouplement par rotation de la chaussure autour d'un axe sensiblement perpendiculaire à la surface ou plaque d'appui et à l'encontre d'une force de libération ou d'un système à ressort de libération, caractérisée en ce qu'

une mâchoire de chaussure (9) qui reçoit en coopération de formes la pièce d'accouplement (15) ou une partie de la chaussure ou de la semelle, ladite mâchoire pouvant être pivotée sur la pédale autour d'un axe (6) sensiblement perpendiculaire à la surface ou plaque d'appui (3) à l'encontre de la force de libération ou du système à ressort de libération (7) et pouvant déplacée vers le haut par rapport à la surface ou plaque d'appui (3) ou pouvant être basculée autour d'un axe (8) sensiblement parallèle à la surface d'appui, peut être poussée vers le bas, depuis une position d'entrée (fig. 2) soulevée par rapport à la surface ou plaque d'appui (3) dans laquelle la pièce d'accouplement (15), ou la partie de chaussure ou de semelle, peut être engagée dans la mâchoire de chaussure (9) ou extraite hors de celle-ci en direction sensiblement parallèle à la semelle, en particulier dans la direction longitudinale de la chaussure, dans une position de verrouillage contre la surface ou plaque d'appui (3) lorsque la pièce d'accouplement ou la pièce de chaussure ou de semelle (15) est engagée, position dans laquelle une pièce de verrouillage (11) prévue côté pédale s'engage dans une pièce de contre-verrouillage (15″) prévue sur la pièce d'accouplement (15) ou la partie de chaussure ou de semelle, et en ce que, lorsque la mâchoire (9) est pivotée hors de sa position de verrouillage à l'encontre de la force de libération ou du système à ressort de libération (7) par rotation autour de l'axe (6) sensiblement perpendiculaire à la surface ou plaque d'appui (3), un organe de verrouillage (10) qui assure la position de verrouillage de la mâchoire de chaussure (9) libère la mâchoire de semelle (9) et/ou en ce que la pièce de verrouillage (11) se dégage hors de la pièce de contre-verrouillage (15″).

2. Pédale de bicyclette selon la revendication 1, caractérisée en ce que la mâchoire de chaussure (9) est repoussée en direction de la position d'entrée (fig. 2) au moyen d'un ressort (12).

3. Pédale de bicyclette selon l'une ou l'autre des revendications 1 et 2, caractérisée en ce que la pièce de verrouillage (11) peut être pivotée ensemble avec la mâchoire de chaussure (9) autour de l'axe (6) perpendiculaire à la surface ou plaque d'appui (3) et, lorsque la mâchoire de chaussure (9) pivote à l'encontre de la force de libération ou du système à ressort de libération (7), bascule vers le bas par rapport à la surface ou plaque d'appui (3) et se dégage ainsi hors de la pièce de contre-verrouillage (15″).

4. Pédale de bicyclette selon la revendication 3, caractérisée en ce que la pièce de verrouillage (11) est repoussée par un ressort (12) contre une surface ou piste de guidage (plaque d'appui 3), qui est suivie par une dépression ou un évidement (4) dans lequel tombe la pièce de verrouillage (11) lorsque la mâchoire de chaussure (9) pivote à l'encontre de la force de libération ou du système à ressort de libération (7).

5. Pédale de bicyclette selon l'une ou l'autre des revendications 3 et 4, caractérisée en ce qu'un ressort unique (12), par exemple un ressort à bras, repousse la mâchoire de chaussure (9) dans la position d'entrée (fig. 2) et la pièce de verrouillage (11) vers le bas.

6. Pédale de bicyclette selon l'une quelconque des revendications 1 à 5, caractérisée en ce que la pièce de verrouillage (11) en position de verrouillage (fig. 3) s'engage dans un oeillet (15″) dans la pièce d'accouplement (15).

7. Pédale de bicyclette selon l'une quelconque des revendications 1 à 5, caractérisée en ce que la pièce de verrouillage (11) en position de verrouillage (fig. 3) coopère avec une saillie ou un évidement de la semelle (13), ou de la bordure de la semelle ou d'une partie de la chaussure.

8. Pédale de bicyclette selon l'une quelconque des revendications 1 à 7, caractérisée en ce que l'organe de verrouillage (10) ou les organes de verrouillage sont sollicités par ressort et se verrouillent automatiquement avec l'organe de contre-verrouillage (3′) lorsque la mâchoire de chaussure (9) est appuyée vers le bas par rapport à la surface ou plaque d'appui (3), et en ce que l'engagement de verrouillage peut être annulé par pivotement de la machoire de chaussure (9) à l'encontre de la force de libération ou du système à ressort de libération (7).

9. Pédale de bicyclette selon la revendication 8, caractérisée en ce que les organes de verrouillage sont réalisés sous la forme de coulisseaux ou de loquets (10) sollicités par ressort.

10. Pédale de bicyclette selon l'une quelconque des revendications 1 à 9, caractérisée en ce que la force de libération ou le système à ressort de libération (7) repousse la mâchoire de chaussure (9) dans une position dans laquelle la mâchoire de chaussure (9) peut être repoussée vers le bas dans la position de verrouillage (fig. 3) sans rotation autour de l'axe (6) perpendiculaire à la surface ou plaque d'appui (3).

11. Pédale de bicyclette selon l'une quelconque des revendications 1 à 10, caractérisée en ce que la pièce ou les pièces de verrouillage (11), qui viennent en engagement avec la pièce ou les pièces de contre-verrouillage (15") lorsque la mâchoire de chaussure est repoussée vers le bas, sont agencées de façon stationnaire sur la pédale à distance de l'axe (6) perpendiculaire à la surface ou plaque d'appui, de telle manière qu'elles se dégagent hors de la pièce ou des pièces de verrouillage (11) lorsque la mâchoire de chaussure (9) est pivotée autour de l'axe (6) perpendiculaire à la surface ou plaque d'appui (3).

12. Pédale de bicyclette selon l'une quelconque des revendications 1 à 10, caractérisée en ce qu'il est prévu un oeillet (15") côté chaussure en tant que pièce de contre-verrouillage, dans lequel pénètre la pièce de verrouillage (11) depuis le bas lorsque la mâchoire de chausse (9) est repoussée vers le bas.

13. Pédale de bicyclette selon l'une quelconque des revendications 1 à 12, caractérisée en ce que l'organe ou les organes de verrouillage (10) sont libérables.

14. Pédale de bicyclette selon l'une quelconque des revendications 1 à 13, caractérisée en ce que la résistance à la libération de la mâchoire de chaussure (9), produite par un ressort (7), peut être réglée ou modifiée.

# FIG. 1

FIG. 2

FIG. 3

FIG. 4

FIG. 5

EP 0 363 663 B1

FIG. 6

14